# EUROPEAN PATENT APPLICATION

(11) **EP 0 708 163 A2**
(43) Date of publication of application: **24.04.1996**
(21) Application number: 95108337.7
(22) Date of filing: 31.05.1995
(51) Int. Cl.: C09J 7/04, A41H 27/00

(54) **Adhesive sheet**

(30) Priority: 21.10.1994 JP 282720/94
(71) Applicant: TOYO CLOTH CO., LTD., Sennan-shi Osaka-fu (JP); Toyo Knitting Co., Ltd, Yokkaichi-shi, Mie-ken (JP)
(72) Inventor: Hyogo, Toyomitsu, c/o Toyo Cloth Co., Ltd., Sennan-shi, Osaka-fu (JP); Fujiwara, Naganori, c/o Toyo Cloth Co., Ltd., Sennan-shi, Osaka-fu (JP); Kadowaki, Takeshi, c/o Toyo Knitting Co., Ltd., Osaka-shi (JP)
(74) Representative: VOSSIUS & PARTNER

(57) **Abstract**

There is provided an adhesive sheet which comprises a support sheet having stretching elasticity and resistance to heat, wherein a hot-melt adhesive layer having stretching elasticity is provided on at least one surface of said support sheet.

## Description

The present invention relates to an adhesive sheet which is suitable for adhesive-sewing the clothes (bonding the cloths using an adhesive without using threads), for example, swimming wear and other sports wear, girdles and other foundations by utilizing the knitted or woven fabrics having high stretchability.

As a method for bonding the cloths without using threads for machine sewing, there is known a method for adhesion of the cloths by holding, between two cloths, a hot-melt type non-woven fabric made of thermoplastic synthetic fibers having a lower melting point, followed by heating using a flat-iron or the like. However, since the prior art hot-melt type non-woven fabric has poor stretchability, its use is limited only to the parts where no stretching and shrinking are required, such as the cuffs of trousers and the like. For manufacturing sports wear made of knitted or woven fabrics having great stretchability, only machine sewing can be utilized and, therefore, the elimination of labor in the sewing step has not yet been accomplished.

For improving the fitting properties of shoulder's string, arm hole, crotch hole and the like of swimming wear, a tube is formed along the hole part, and a rubber string and the like having good stretchability is inserted in the tube and is sewn thereon. Alternatively, a thin film-like tape made of polyurethane having good stretchability is tentatively fixed along the edge of the fabric by machine sewing, and the fabric is bent so that it wraps the tape, followed by additional machine-sewing. In this case, sewing is troublesome. In addition, since the knitted fabrics are piled in a double or triple manner and a sewing thread is added, the above hole part becomes bulky and thereby the liquid resistance in water is increased. Therefore, in the field where the liquid resistance in water is regarded as important, such as race swimming wear, there is a demand for decrease in the bulkiness of the above hole parts.

The main object of the present invention is to provide an adhesive sheet which can be used for so-called adhesive-sewing where the bonding is carried out not by machine sewing but by adhesion upon manufacture of swimming wear and other sports wear made of knitted or woven fabric having great stretchability. Another object of the present invention is to provide an adhesive sheet which does not impair the stretchability of the knitted or woven fabric to be bonded. Yet another object of the present invention is to provide an adhesive sheet which can decrease the bulkiness of the shoulder's string, arm hole, crotch hole and the like of swimming wear.

According to the present invention, there is provided an adhesive sheet which comprises a support sheet having stretching elasticity and resistance to heat, wherein a hot-melt adhesive layer having stretching elasticity is provided on at least one surface of said support sheet.

Also provided is a method for adhesive-sewing the parts of the clothes to be bonded, which comprises using an adhesive having stretchability, and an adhesive-sewn part of the clothes, and bonding using a hot-melt adhesive having stretching elasticity.

Fig. 1 is a cross sectional view of an adhesive-sewn part where a double-coated adhesive sheet is used.

Fig. 2 is a cross sectional view showing another adhesive-sewn part.

Fig. 3 is a cross sectional view showing yet another adhesive-sewn part.

Fig. 4 is a cross sectional view of an adhesive-sewn part where a single-coated adhesive sheet is used.

Fig. 5 is a cross sectional view of one embodiment of an adhesive-sewn part where a single-coated adhesive sheet is also used in Fig. 1.

Fig. 6 is a cross sectional view of an adhesive-sewn part where two double-coated adhesive sheets are used.

Fig. 7 is a cross sectional view of another embodiment of an adhesive-sewn part where a single-coated adhesive sheet is also used in Fig. 1.

Fig. 8 is a cross sectional view of an adhesive-sewn part where a single-coated adhesive sheet is also used in Fig. 3.

Fig. 9 is a cross sectional view of another adhesive-sewn part where a single-coated adhesive sheet is used.

Fig. 10 is a schematic view which shows how to test the peel strength of the bonded part.

Fig. 11 is a schematic view which shows how to test the shear strength of the bonded part.

The support sheet in the present invention has a rubber-like stretching elasticity such that it can be stretched and shrunk in both longitudinal and transverse directions. The support sheet also has such a degree of resistance to heat that it is not softened or denatured at the melting point of the adhesive layer. The melting point of the support sheet is preferably not lower than 165 °C. When the melting point is lower than 165 °C, the support sheet is liable to soften upon contact bonding to the knitted or woven fabric by heating. In such a case, since the adhesive easily infiltrates the knitted or woven fabric, the bonded part becomes firmer and, as the result, the stretchability thereof is lowered. The examples of preferable support sheets are films made of polyurethane elastomer having a melting point of not lower than 170 °C, such as polyetherpolyurethane, polyesterpolyurethane or the like. The films may have a number of perforated holes. The thickness of the films is preferably 40 to 100 µm. When the thickness is smaller than 40 µm, the films have insufficient elasticity. On the other hand, when the thickness is larger than 100 µm, the bonded part becomes harder and more bulky.

Alternatively, a cloth-like sheet containing polyurethane fibers and having stretchability in both longitudinal and transverse directions, for example, warp knitted fabrics or flat knitted fabrics, made of polyurethane yarns and nylon filament yarns, in the net form such as power net and the like, woven fabrics wherein the conjugate yarns containing naked or normal yarns of polyurethane fibers are mixed into warp and weft of the woven fabrics made of the normal yarns such as nylon filament yarns and the like, and non-woven fabrics wherein the contacted parts between filaments of the web made of polyurethane filaments are fused or adhesive-bonded and the like may be used instead of the above polyurethane films as the support sheet. The polyurethane films and non-woven fabrics can be cut into tapes, rings, circular arcs, and other arbitrary shapes upon use. Warp knitted fabrics, flat knitted fabrics and woven fabrics are preferably cut into tapes having a constant width. The adhesive layer provided on at least one surface of the support film is of hot-melt type and has stretching elasticity. One example of the material for the layer is a two-part liquid polyurethane. The melting point of the adhesive layer is preferably 50 to 110 °C. When the melting point is lower than 50 °C, the surface of the film after drying is still sticky and thereby the processability in the adhesive-sewing is lowered. On the other hand, if the melting point is higher than 110 °C, the flowing properties are decreased upon heat adhesion and thereby the adhesive force is lowered. The thickness of the adhesive layer is at least 20 µm. Preferably, the thickness is increased up to the half of the thickness of the knitted or woven fabrics to be bonded depending upon the thickness of said fabrics. When the thickness of the layer is lower than 20 µm, the adhesive force is lowered because of an insufficient amount of the adhesive. When the thickness exceeds the half of the thickness of the knitted or woven fabrics, the bonded part becomes harder in the hand and becomes bulky. However, from a viewpoint of processability, the thickness is preferably not larger than 100 µm, particularly not higher than 40 µm because the adhesive coating can not be effectively carried out when the adhesive thickness grows greater.

For example, the adhesive layer can be formed as follows: a two-part liquid polyurethane together with a curing agent is dissolved in a solvent such as a 1:1 mixed solvent of toluene/ethyl acetate or the like to obtain an adhesive liquid having a viscosity of 10 to 15 Pa·S at 25 °C, which is coated on a releasing paper and dried. Thereafter, the coated surface is laid on the support film, and the releasing paper and the film are contact bonded by heating from the releasing paper side to complete the cross-linking reaction of the adhesive liquid. Examples of the curing agent to be added to the two-part liquid polyurethane are aromatic polyisocyanate, aliphatic polyisocyanate and the like. The amount of the curing agent to be added is preferably 5 to 25 % of the theoretical amount (equivalents) required for the cross-linking reaction. When the amount to be added is smaller than 5 % of the above equivalents, the adhesive force is lowered. On the other hand, when the amount to be added is larger than 25 %, the adhesion of the cloth can not be effectively carried out and the resulting adhesion force is dispersed because of the higher melting point of the adhesive layer while the adhesive force becomes stronger.

A preferable formulation of the adhesive liquid is as follows:

| | |
|---|---|
| Two-part polyurethane (35 % solution) | 100 parts by weight |
| Solvent | 15-25 parts by weight |
| Curing agent | 0.3-0.6 parts by weight |

Alternatively, the melting point of the adhesive layer can be lowered and the adhesive force can be increased by adding another hot-melt adhesive having a great adhesive force such as polyester adhesive and the like while the amount of the curing agent to be added is decreased. In this case, the mixing ratio of two-part liquid polyurethane adhesive and polyester adhesive is preferable not lower than 50/50. An example of a preferable formulation where polyester adhesive is added as the other hot-melt adhesive is as follows:

| | |
|---|---|
| Polyester resin | 100 parts by weight |
| Melamine resin | 4-6 parts by weight |
| MEK | 8-11 parts by weight |
| Toluene | 12-17 parts by weight |
| Additive | 2.5-3.5 parts by weight |

The adhesive sheet of the present invention can be in the form of a continuous sheet having a width of greater than 1000 mm. Then a releasing paper is laid on the adhesive layer surface and they are slit into tapes having the desired width. Alternatively, they are cut or punched into an arbitrary shape such as rings, circular arcs, V shape and the like depending upon the shape of the part to be adhesive-sewn, for example, arm hole, neck line, kneepad and the like. Thereafter, the releasing paper is peeled off upon use.

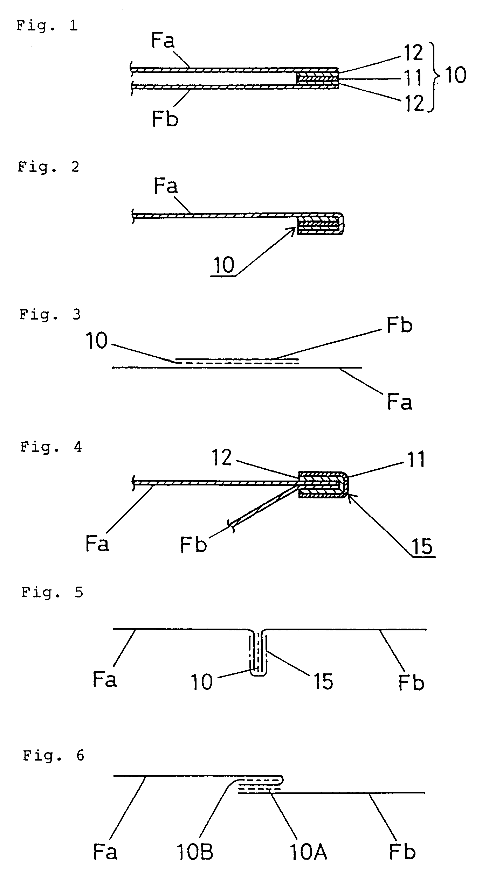

As shown in Fig. 1, a double-coated adhesive sheet (cut piece) 10 having an adhesive layer 12 on both front and back surfaces of the support sheet 11 is held between two knitted or woven fabrics Fa and Fb to be bonded, the heat and pressure are applied from one side using a flat-iron and thereby the two knitted or woven fabrics Fa and Fb are bonded via the double-coated adhesive sheet 10. Since both the support sheet 11 and the adhesive layer 12 of the double-coated adhesive sheet 10 have good stretching elasticity, the double-coated adhesive sheet 10 dose not impair the stretch properties of the knitted or woven fabrics Fa and Fb and the bonded surfaces are not peeled by stretching and shrinking of the knitted or woven fabrics Fa and Fb. Further, the bonding properties to the knitted or woven fabrics Fa and Fb become uniform due to the presence of the support sheet 11; thereby the stretchability is increased to improve the fitting properties of the clothes.

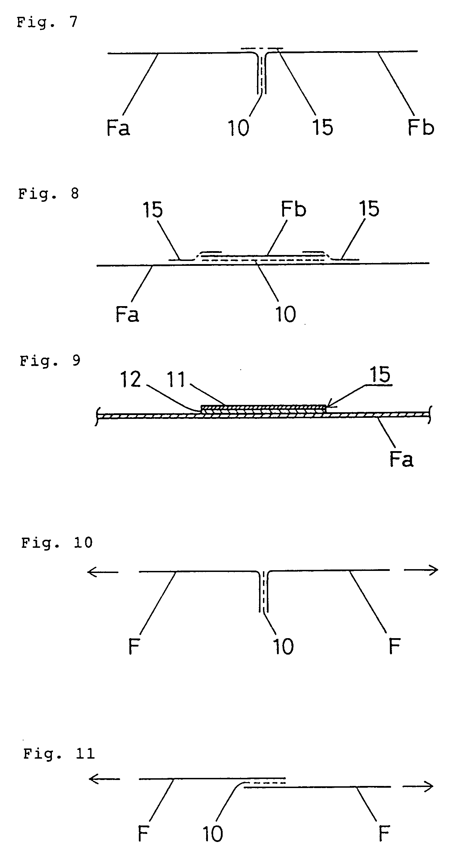

As shown in Fig. 2, the double-coated adhesive sheet 10 which is slit into tapes is rolled in the edge of a knitted or woven fabric Fa which constitutes pants, socks or the like along the part thereof which it is to be put on followed by application of the heat and pressure to bond the double-coated adhesive sheet 10 to the front and back surfaces of knitted or woven fabric Fa. In this case, the support sheet 11 acts as a band for clamping. Alternatively, as shown in Fig. 3, the reinforcing knitted or woven fabric Fb having the arbitrary shape is laid on the desired part of the knitted or woven fabric Fa which constitutes the body of a garment together with a double-coated adhesive sheet 10 which was cut into pieces having the same shape as that of the reinforcing knitted or woven fabric Fb, followed by addition of the heat and pressure to increase the modulus of elasticity of the bonded part over that of other parts. Alternatively, the double-coated adhesive sheet 10 having arbitrary shape shown in Fig. 3 is perforated in the center part thereof while leaving the edge part in the form of ring. The perforated sheet can be used for reinforcing.

Fig. 4 shows how to use a single-coated adhesive sheet (cut piece) 15 having the adhesive layer 12 on one surface of the support sheet 11. That is, the edges of two thin knitted or woven fabrics Fa and Fb are overlaid, the overlaid edges are wrapped with a single-coated adhesive 15 having an adhesive layer 12 on one surface of the support sheet 11 so that the adhesive layer 12 surface is inside, followed by heat adhesion to bond the edges of the upper and lower knitted or woven fabrics Fa and Fb. In this case, when two knitted or woven fabrics Fa and Fb are not thin fabrics, a double-coated adhesive sheet 10 may be intervened between the edges of two knitted or woven fabrics Fa and Fb as shown in Fig. 5.

When two knitted or woven fabrics Fa and Fb of Figs. 1, 4 and 5 are stretched in the opposed direction, the peeling force acts on the bonded surface of the two knitted or woven fabrics Fa and Fb. In this case, in order to improve the resistance to peeling force, the shearing force resulting from the first double-coated adhesive sheet 10A may be generated against the tensile force of two knitted or woven fabrics Fa and Fb by bonding the edges of two knitted or woven fabrics Fa and Fb with the first double-coated adhesive sheet 10A, laying the edge of the knitted or woven fabric Fa on the back surface of the sheet 10A, and bonding this overlaid part with the second double-coated adhesive sheet 10B as shown in Fig. 6. Alternatively, the shearing force of the single-coated adhesive sheet 15 may be generated against the above tensile force by bonding the edges of two knitted or woven fabrics Fa and Fb with the double-coated adhesive sheet 10, and bonding a single-coated adhesive sheet 15 to the front surface of the above bonded part (upper side in Fig. 7) as shown in Fig. 7.

Fig 8 shows the case where a reinforcing knitted or woven fabric Fb is bonded to a knitted or woven fabric Fa which constitutes the body of the garment with the double-coated adhesive sheet 10, and bonding the single-coated adhesive sheet 15 which was cut into tapes or rings along the edge of the reinforcing knitted or woven fabric Fb. In this case, the edge of the reinforcing knitted or woven fabric Fb is coated with the single-coated adhesive sheet 15. Fig. 9 shows the case where a single-coated adhesive sheet 15 having the arbitrary shape is laid on the desired part of the knitted or woven fabric Fa which constitutes the body of the garment, and the heat and pressure are applied to bond the laid part and, as the result, the modulus of elasticity of the bonded part is greater than that of other parts. In this case, the cloth-like sheet containing polyurethane fibers, for example, warp knitted fabrics, in the form of power net and the like, made of polyurethane yarns and nylon filament yarns may be used to improve the appearances.

The following Examples further illustrate the present invention in detail.

### Example 1

100 Parts by weight of two-part liquid polyurethane adhesive (trade name: CRISVON; manufactured by Dainihoninkkogyo K.K.) and 20 parts by weight of a 1/1 mixed solvent of toluene and ethyl acetate, and 0.5 parts by weight (10 % of isocyanate equivalents) of aromatic polyisocyanate (trade name: CORONATE-L; manufactured by Nihonpolyurethanekogyo K.K.) as a curing agent were mixed to obtain an adhesive liquid.

The adhesive liquid thus formulated was coated on a releasing paper, and dried at 80 °C for two minutes to form an adhesive layer having the thickness of 20 µm. This adhesive layer was laid on both front and back surfaces of a support film made of polyetherpolyurethane film (trade name: MOBILON; manufactured by Nisshinboseki K.K., thickness: 100 µm), and the laid paper and support film were contact bonded at 100 °C at the pressure of 2 kg/cm² using a heat roll to give a double-coated adhesive sheet (Sample 1) which was slit into pieces having the width of 10 mm.

Samples having the width of 10 mm and the length of 200 mm was cut from two-way knitted fabric (weight 220 g/m²) for swimming wear, made of 80/20 of polyester multifilament yarns (40 denier/36 filaments) and urethane elastic yarns (40 denier) and having the longitudinal breaking elongation of 220 % and the transverse breaking elongation of 220 %. A double-coated adhesive sheet (width: 10 mm, length: 200 mm) (Sample 1) was held between the above two samples, followed by bonding by heat press at 150 °C under the pressure of 3 kg/cm² for 30 seconds.

### Example 2

Substantially the same manner as that in Example 1 was repeated except that polyetherpolyurethane film (trade name: R-5390; manufactured by Nihonbulker K.K., thickness; 100 µm) was used as a support film in Sample 1, to give a double-coated adhesive sheet (Sample 2) which was slit into pieces, followed by bonding the knitted fabrics as described above.

### Example 0

The same adhesive liquid as in Samples 1 and 2 was coated on a releasing paper, followed by drying at 80 °C for 4 minutes to form an adhesive layer having the thickness of 40 µm. The resulting sheet (Sample 0) was slit into pieces, followed by bonding the knitted fabrics as described above.

### Test

Two marks were made, at a distance of 100 mm, on the center line of middle part of test pieces of respective bonded knitted fabrics (width; 10 mm, length; 200 mm) wherein Sample 1 or Sample 2 was used. The respective test pieces were mounted on a tensile machine at grab distance of 100 mm. Tensile force of 2.2. kg was pre-applied to test pieces for 10 minutes, at which time the distance L₁ between marks was measured. The load was then removed to relax the test pieces. After 10 minutes, the distance L₂ between marks was measured. Elongation and elastic recovery were calculated using L₁ and L₂ values. Separately, the peel strength (bond strength) per 10 mm width was measured by stretching two knitted fabrics F and F which had been bonded via a double-coated sheet 10 at right angle direction to the bonded surface as shown in Fig. 10. Further, the shear strength per 50 mm² (5 mm × 10 mm) was measured by stretching two knitted fabrics F and F which had been bonded via a double-coated sheet 10 in parallel with the bonded surface as shown in Fig. 11.

The same test was carried out on the bonded knitted fabrics using Sample 0.

The results thereof are shown in Table 1.

**Table 1**

| Sample No. | 0 | 1 | 2 |
|---|---|---|---|
| L₁ (mm) | 198 | 233 | 216 |
| L₂ (mm) | 142 | 138 | 147.5 |
| Elongation (%) | 98 | 133 | 116 |
| Elastic recovery (%) | 57 | 71 | 59 |
| Peel strength (kg/cm) | 1.4 | 1.5 | 1.6 |
| Shear strength (kg/50mm²) | 5.5 | ≧ 6 (knitted fabric broken) | ≧ 6 (knitted fabric broken) |

### Examples 3 to 6

Substantially the same manner as that in Example 1 was repeated except that an amount of the curing agent was varied in the adhesive liquid for Sample 1, to give double-coated adhesive tapes (Sample No. 3 to 6) which were used to bond the above knitted fabrics. Elongation, elastic recovery, peel strength and shear strength of the bonded knitted fabrics were measured as described above.

The amount (equivalent %) of the curing agent, L₁. L₂, elongation, elastic recovery, peel strength and shear strength are shown in Table 2.

**Table 2**

| Sample No. | 3 | 4 | 5 | 6 |
|---|---|---|---|---|
| Amount of curing agent (equivalent %) | 5 | 10 | 25 | 50 |
| L₁ (mm) | 238 | 233 | 231 | 228 |
| L₂ (mm) | 146 | 138 | 134 | 132 |
| Elongation (%) | 138 | 133 | 131 | 128 |
| Elastic recovery (%) | 67 | 71 | 74 | 75 |
| Peel strength (kg/cm) | 1.6 | 1.5 | 1.5 | 1.0 |
| Shear strength (kg/50mm²) | ≧ 6* | ≧ 6* | ≧ 6* | 4 |

| | | | | |
|---|---|---|---|---|
| * designates that the knitted fabric was broken. | | | | |

### Examples 7 to 10

Substantially the same manner as that in Example 1 was repeated except that an adhesive liquid obtained by mixing respective polyester adhesive liquid (adhesive B) into an adhesive liquid (adhesive A) for Sample 1 at various rate was used instead of an adhesive liquid (adhesive A) for Sample 1, to give double-coated adhesive tapes (Sample No. 7 to 10) which were used for bonding the above knitted fabrics. Elongation, elastic recovery, peel strength and shear strength of the bonded knitted fabrics were measured as described above.

Ratio of adhesive A/adhesive B, L₁, L₂, elongation, elastic recovery, peel strength and shear strength are shown in Table 3.

**Table 3**

| Sample No. | 7 | 8 | 9 | 10 |
|---|---|---|---|---|
| Ratio of adhesive A/B | 25/75 | 50/50 | 75/25 | 100/0 |
| L₁ (mm) | 226 | 230 | 233 | 235 |
| L₂ (mm) | 146 | 138 | 137 | 139 |
| Elongation (%) | 126 | 130 | 133 | 135 |
| Elastic recovery (%) | 64 | 71 | 72 | 71 |
| Peel strength (kg/cm) | 1.1 | 1.3 | 1.6 | 1.5 |
| Shear strength (kg/50mm²) | 3.8 | ≧ 6* | ≧ 6* | ≧ 6* |

| | | | | |
|---|---|---|---|---|
| * designates that knitted fabric was broken. | | | | |

As apparent from above Tables 1 to 3, the peel strength measured by stretching the bonded two two-way knitted fabrics for swimming wear in a direction at right angle to the bonded surface (see Fig. 10) was higher than 1.0 kg/cm. On the other hand, it is known that the load which is applied to the bonded part is not higher than 1.0 kg/cm. Therefore, the above adhesive sheets are considered to be practical. In particular, Samples 3, 4 and 5 where the curing agent was used at an amount of 5 to 25 % of isocyanate equivalents, as well as Samples 8, 9 and 10 where a polyester adhesive was mixed into at an amount of not higher than 50 % have the peel strength of higher than 1.3 kg/cm. Therefore, those Samples improve the safety of the bonded part. In addition, the safety of the bonded part can be further improved by reinforcing the bonded part to act the shearing force on the bonded surface as shown in Fig. 6 or 7. When Sample 0 was used, the resulting bonded knitted fabrics have the equivalent peel strength in comparison with other cases.

Next, two samples (width; 10 mm, length; 200 mm) made of the above two-way knitted fabric for swimming wear were overlaid. The central part of the overlaid samples were sewn in a width direction in flatlock stitches (four needles; nine threads) using machine sewing threads (60/3counts). Two longitudinal ends of the sewn overlaid samples were mounted on a tensile machine at a grab distance of 100 mm. Tensile force was applied to the sample at rate of 200 mm/min. The sewn part was broken at the shearing stress of 4 kg/cm. When compared with the shear strength of above Samples 1 to 10, it is apparent that Samples 3, 4 and 5 where the curing agent was used at an amount of 5 to 25 % of isocyanate equivalents, as well as Samples 8, 9 and 10 where a polyester adhesive was mixed into at an amount of less than 50 % had higher shear strength than that of the machine-sewn part. Thus, it was confirmed that, by using adhesive-sewing, the strength of the bonded part can be higher than that of the sewn part, if necessary.

An adhesive layer on a releasing paper obtained as in Sample 1 was laid on one surface of the support film for Sample 1, and the overlaid part was contact bonded using a heat roll to give a single-coated adhesive sheet (Sample 11) which was cut into tapes having the width of 5 mm. Using this single-coated adhesive sheet in the tape form, the opening of finger tip side of women's tights made of texturized nylon yarn was closed in the same manner as that shown in Fig. 4. That is, a single-coated adhesive sheet 15 was folded in a double manner. The opening end of finger tip side of the turned over cylindrical knitted fabrics Fa and Fb was held in the inside of the folded part, followed by addition of the heat and pressure to bond the folded part. In addition, an double-coated adhesive sheet (Sample 1) 10 in the tape form was applied to the trunk part (hole to be put on) in a manner as shown in Fig. 2.

The adhesive layer of two-part liquid polyurethane adhesive on a releasing paper obtained according to the same manner as in Sample 1 was laid on warp knitted fabric in the net form (power net), as a support sheet, made of nylon multifilament yarns (75 denier) and polyurethane yarns (140 denier). The overlaid part was contact bonded using a heat roll to give a single-coated adhesive sheet 15 (Sample 12) (see Fig. 9) which was cut into U shape for surrounding the human hip. The U shaped cut sheet was laid on panty girdle, for surrounding the human hip, made of warp knitted fabric (see knitted fabric Fa in Fig. 9) in the net form, followed by contact bonding by heating with a flat-iron, to give a hip-up girdle. Separately, a number of patches obtained by punching the above single-coated adhesive sheet 15 into circles having the diameter of 30 to 55 mm were applied to the U shape part, for surrounding the hip part, of the above panty girdle, in a row, to give a hip-up girdle.

The effects of the present invention are as follows.

The present invention of claim 1 is an adhesive sheet which comprises a support sheet having stretching elasticity and resistance to heat, wherein a hot-melt adhesive layer having stretching elasticity is provided on at least one surface of said support sheet. Since both the support sheet and adhesive layer have the stretching elasticity, the adhesive sheet of claim 1 dose not impair the stretch properties of a bonded cloth when used for bonding the cloth having great two-directional (longitudinal and transverse) stretchability such as the knitted fabric for swimming wear. Therefore, the adhesive sheet of the present invention can be used for adhesive-sewing instead of the conventional machine-sewing. In addition, since the adhesive layer is of the hot-melt type, the adhesive sheet of claim 1 can be easily bonded to two cloths by holding between the two cloths and heating with a flat-iron or the like. In this case, a solvent is not used and thereby the working atmosphere is not polluted. Further, the adhesive sheet of claim 1 enables a greater elimination of labor comparing with the previous machine-sewing. Further, since the adhesive sheet of claim 1 can decrease the bulkiness of the bonded part, it decreases the liquid resistance in water when used, in particular, for adhesive-sewing of race swimming wear.

The present invention of claim 2 is an adhesive sheet wherein a film made of polyurethane elastomer is used as a support sheet in claim 1. Thus, the adhesive sheet of claim 2 can endow the cloths with the stretchability which is uniform in all directions. In addition, the adhesive sheet of claim 2 can be used by cutting into an arbitrary shape such as a tape having a constant width, ring, circular arc, circle, ellipse and the like depending upon the shape of the part to be adhesive-sewed.

The present invention of claim 3 is an adhesive sheet wherein a cloth-like sheet such as woven fabric, knitted fabric, non-woven fabric or the like having stretching elasticity is used as a support in claim 1. In particular, when an adhesive layer is provided on one surface of the sheet, since the above cloth-like sheet appears outside, the resulting bonded cloth has good appearance.

The present invention of claim 4 is an adhesive sheet wherein a two-part liquid polyurethane adhesive is used as the adhesive layer in claim 2 or 3. Thus, by using an aromatic or aliphatic polyisocyanate at an amount of 5 to 25 % of isocyanate equivalents as a curing agent, the adhesive-sewn part having softness, resistance to water, resistance to heat and resistance to dry-cleaning can be obtained. The adhesive sheet of claim 4 is useful for adhesive-sewing spats, leotard and swimming wear and the like.

The present invention of claim 5 is an adhesive sheet wherein a mixture of a two-part liquid polyurethane adhesive and a polyester adhesive is used as an adhesive layer in claim 2 or 3. Thus, since the softening point scarcely changes depending upon the surrounding temperature and humidity or for a time of course, the heat adhesion process can be carried out under the stable conditions.

## Claims

1. An adhesive sheet which comprises a support sheet having stretching elasticity and resistance to heat, wherein a hot-melt adhesive layer having stretching elasticity is provided on at least one surface of said support sheet.

2. The adhesive sheet according to claim 1, wherein the support sheet is a film made of polyurethane elastomer.

3. The adhesive sheet according to claim 1, wherein the support sheet is a cloth-like sheet containing polyurethane fibers.

4. The adhesive sheet according to claim 2 or 3, wherein the adhesive layer comprises a two-part liquid polyurethane adhesive.

5. The adhesive sheet according to claim 2 or 3, wherein the adhesive layer comprises a mixture of a two-part liquid polyurethane adhesive and a polyester adhesive.

6. An adhesive sheet which comprises a releasing paper, wherein a hot-melt adhesive layer having the stretching elasticity is provided on both surfaces of said releasing paper.

7. An adhesive sheet which comprises a releasing paper, wherein a hot-melt adhesive layer having the stretching elasticity is provided on one surface of said releasing paper and wherein said adhesive sheet is in a wound form.

8. A method for adhesive-sewing the parts to be bonded of the clothes which comprises using an adhesive having stretchability.

9. An adhesive-sewn part of the clothes which comprises being bonded using a hot-melt adhesive having stretching elasticity.

10. The adhesion-sewn part of the clothes according to claim 9, wherein the hot-melt adhesive is a two-part liquid polyurethane adhesive.

11. The adhesion-sewn part of the clothes according to claim 9, wherein the hot-melt adhesive is a mixture of a two-part liquid polyurethane adhesive and a polyester adhesive.
